# FASCICULE DE BREVET EUROPEEN

(11) **EP 3 370 936 B1**
(45) Date de publication et mention de la délivrance du brevet: **30.12.2020**
(21) Numéro de dépôt: 16809127.0
(22) Date de dépôt: 03.11.2016
(51) Int. Cl.: B29C 33/40, B29C 33/42, B29C 33/38

(54) **PROCÉDÉ ET MOULE POUR LA RÉALISATION D'UN ÉLÉMENT AÉRODYNAMIQUE COMPORTANT DES RIBLETS**
VERFAHREN UND FORM ZUR ERZEUGUNG EINES AERODYNAMISCHEN ELEMENTS MIT RIPPEN
METHOD AND MOULD FOR CREATING AN AERODYNAMIC ELEMENT COMPRISING RIBLETS

(30) Priorité: 05.11.2015 FR 1560621
(43) Date de publication de la demande: 12.09.2018
(73) Titulaire: SAFRAN, 75015 Paris (FR)
(72) Inventeur: LANFANT, Nicolas, Pierre, 77550 Moissy-cramayel (FR); GONCALVES, Emilie, 77550 Moissy-cramayel (FR)
(74) Mandataire: Brevalex
(86) Numéro de dépôt international: PCT/FR2016/052847
(87) Numéro de publication internationale: WO 2017/077239

(56) Documents cités:
- EP-A1- 2 818 292
- US-A1- 2013 062 004

## Description

### DOMAINE TECHNIQUE

L'invention concerne un procédé de réalisation d'un élément aérodynamique, tel que par exemple un panneau pour une aile d'aéronef ou une pale de turbomachine, qui comporte une succession de nervures et de rainures orientées parallèlement au flux d'air.

L'invention propose plus particulièrement un procédé pour réaliser les nervures/rainures d'une seule pièce avec le reste de l'élément aérodynamique.

### ÉTAT DE LA TECHNIQUE ANTÉRIEURE

Dans un souci d'améliorer les performances aérodynamiques d'un aéronef, il a été proposé d'ajouter des nervures et/ou des rainures sur la face externe des ailes par exemple.

Ces nervures/rainures, communément appelées "Riblets" sont orientées parallèlement au sens d'écoulement du flux d'air et sont disposées sur la surface externe de l'aile.

Les riblets ont communément, mais de manière non limitative, une hauteur et une largeur dont la valeur est de l'ordre de 10 à 50 micromètres et s'étendent longitudinalement sur une majeure partie de l'élément aérodynamique.

Ils ont pour effet de diminuer les frottements du fluide à la surface de l'élément aérodynamique et par conséquent, de diminuer la trainée induite. Cela permet d'améliorer les performances aérodynamiques.

Selon un premier mode de réalisation, les riblets sont formés sur un film qui est ultérieurement apposé sur la face externe de l'élément aérodynamique, notamment par collage.

Un tel mode de réalisation permet de fabriquer facilement les riblets sur une plaque souple qu'il est relativement aisé à apposer sur l'élément aérodynamique.

Cependant, ce mode de réalisation implique de nombreuses étapes dans le processus de fabrication et augmente aussi la masse finale de l'élément aérodynamique, notamment à cause de la présence de moyens de fixation tels que des couches de colle.

Un autre mode de réalisation des riblets est de former ceux-ci dans la masse de l'élément aérodynamique.

En effet, l'élément aérodynamique est généralement réalisé par moulage, notamment en matériau composite, les riblets peuvent ainsi être formés lors de cette opération de moulage.

Le document US-A-2013/0062004 décrit un exemple d'un procédé de moulage de l'élément avec les riblets en une seule pièce.

Selon ce procédé, une paroi du moule comporte des nervures et/ou des rainures complémentaires de celles formant les riblets. La résine venant en contact avec cette paroi comprend alors des formes en relief constituant les riblets.

Pour favoriser le démoulage, un produit, communément appelé "gelcoat", est appliqué sur toutes les faces du moule, y compris sur la face comprenant les nervures et/ou les rainures complémentaires des riblets à obtenir.

Cette couche de produit n'est généralement pas uniforme, ce qui peut affecter la forme finale des riblets.

Aussi, l'élément aérodynamique peut avoir une forme non plane, qui implique que son mouvement par rapport au moule, pour son démoulage, n'est pas toujours localement normal à la surface comportant les riblets.

Ainsi, lors du processus de démoulage, il en résulte des efforts de cisaillement sur les riblets, ce qui peut entrainer que les sommets des nervures formant les riblets soient endommagés et par conséquent, l'efficacité des riblets en est affectée.

Aussi, l'opération de démoulage implique des efforts importants pour séparer l'élément aérodynamique d'avec le moule, notamment à cause d'efforts de frottement entre l'élément aérodynamique et le moule.

Le document EP-2818292 décrit un procédé dans lequel un complexe sous forme liquide est apposé sur le moule puis est polymérisé pour comporter des nervures.

L'invention a pour but de proposer un procédé de réalisation d'un élément aérodynamique comportant des riblets réalisés d'une seule pièce avec l'élément, et qui permet d'assurer que les riblets ne sont pas endommagés lors du démoulage.

### EXPOSÉ DE L'INVENTION

L'invention propose un procédé pour la réalisation d'un élément aérodynamique, notamment pour un aéronef, comportant une face externe et une pluralité de nervures et/ou de rainures parallèles formées sur ladite face externe, le procédé consistant à réaliser simultanément ledit élément et ses nervures et/ou ses rainures par l'utilisation d'un moule, caractérisé en ce que le procédé comporte une étape de fourniture d'un film en un matériau déformable, qui comporte des nervures et/ou des rainures complémentaires aux nervures et/ou aux rainures dudit élément, une étape de positionnement du film sur une paroi du moule, une étape de moulage de l'élément, une étape de séparation de l'élément du moule, simultanément avec ledit film, et une étape de séparation du film d'avec l'élément.

L'utilisation d'un film détachable du moule permet de protéger les nervures et les rainures formant les riblets lors du démoulage de l'élément à produire et le pelage de celui-ci après le démoulage est une méthode évitant d'endommager les riblets. L'utilisation d'un film permet aussi de faciliter le démoulage puisque la surface du moule est lisse et est en contact avec une autre face lisse du film. Les frottements sont très faibles par rapport à l'art antérieur pour lequel la face rugueuse du moule est imbriquée avec la face rugueuse complémentaire de l'élément aérodynamique.

De préférence, l'étape de séparation du film d'avec l'élément consiste à retirer le film de l'élément par pelage.

De préférence, le pelage est réalisé parallèlement à l'orientation principale des nervures/rainures.

De préférence, le pelage est réalisé perpendiculairement à l'orientation principale des nervures/rainures.

L'invention propose aussi un moule pour la mise en œuvre d'un procédé selon l'invention, pour obtenir un élément comportant une face externe et une pluralité de nervures et/ou de rainures parallèles formées sur ladite face externe, caractérisé en ce que l'une des parois du moule associée à la face externe de l'élément est recouverte par un film comportant une face externe destinée à former ladite face externe de l'élément, ladite face externe du film présentant une série de rainures et de nervures complémentaires des nervures/rainures de l'élément.

De préférence, le moule comporte des moyens de liaison du film avec ladite paroi du moule qui permettent le maintien en position du film lors d'une l'étape de moulage de l'élément et qui permettent la séparation du film d'avec le moule lors du retrait de l'élément hors du moule.

De préférence, le film s'étend au-delà des bords de ladite paroi du moule.

De préférence, des parties périphériques du film sont serrées entre au moins deux éléments constituant le moule pour le maintien en position du film sur la paroi du moule.

De préférence, le film est réalisé à partir de polyuréthane, thermoplastique (PEEK, PEKK, PET ou polyamide), de silicone, d'époxy, d'une feuille métallique ou d'une peinture.

De préférence, le film comporte une face qui est en contact avec ladite paroi du moule et dont ladite face et ladite paroi sont toutes les deux lisses.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'une aile d'aéronef comportant des riblets réalisés selon l'invention ;
- la figure 2 est un détail à plus grande échelle d'un exemple de réalisation de riblets ;
- la figure 3 est une section d'un moule comportant un film pour être utilisé dans le procédé selon l'invention ;
- les figures 4A et 4B sont des représentations de l'élément moulé avec et sans le film, obtenus après l'opération de démoulage ;
- la figure 5 est une représentation de l'opération de pelage selon une direction perpendiculaire aux riblets ;
- la figure 6 est une représentation de l'opération de pelage selon une direction parallèle aux riblets.

### EXPOSÉ DÉTAILLÉ DE MODES DE RÉALISATION PARTICULIERS

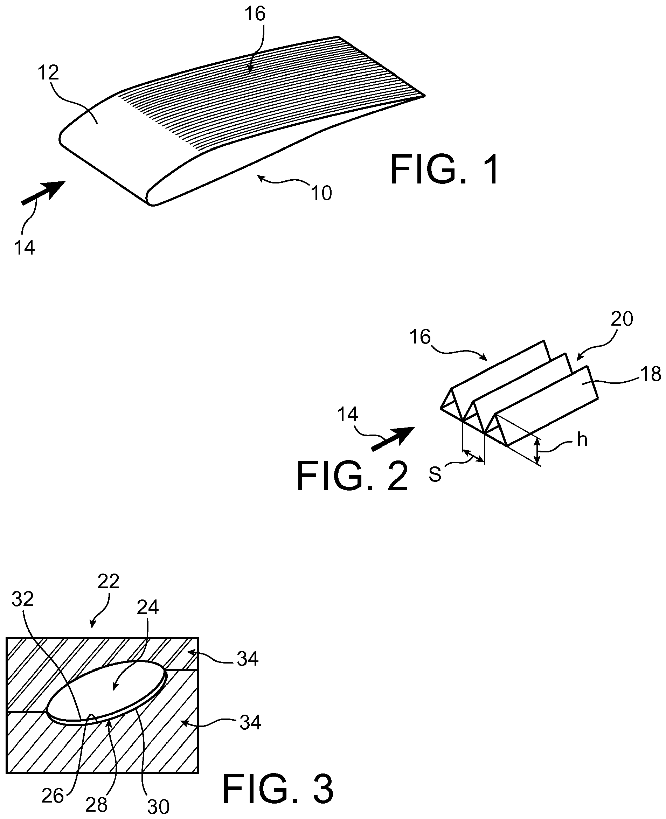

On a représenté à la figure 1 un élément aérodynamique 10 qui consiste ici en un tronçon d'une aile d'aéronef.

Cet élément 10 comporte une face externe 12, ici la face d'extrados, sur laquelle un flux d'air 14 circule longitudinalement.

Afin d'améliorer l'efficacité aérodynamique de l'élément 10, des riblets 16 sont formés sur la face externe 12 de l'élément 10.

Comme on peut le voir plus en détails à la figure 2, les riblets 16 consistent en une succession de nervures 18 et de rainures 20 qui sont orientées longitudinalement, c'est-à-dire parallèlement à la direction de circulation du flux d'air 14 sur la face externe 12.

Ici, la hauteur "h" et la largeur "s" des nervures 18 et des rainures 20 sont très faibles, c'est-à-dire de l'ordre de 10 à 50 micromètres. Il sera compris que l'invention n'est pas limitée à ces dimensions des riblets qui peuvent par conséquent être plus importantes ou plus faibles.

La section des riblets 16 est ici triangulaire. Il sera compris que l'invention n'est pas limitée à cette forme des riblets, qui peut être, à titre d'exemple non limitatif, trapézoïdale ou en créneau.

La longueur longitudinale des riblets est définie en fonction de la longueur de la face externe 12 sur laquelle ceux-ci sont formés.

Dans la description qui va suivre on fera référence à un procédé de moulage par injection de résine dans un moule 22 pour la réalisation de l'élément 10. Ici aussi, il sera compris que l'invention ne se limite pas à un tel procédé de réalisation de l'élément 10. Ainsi, l'élément 10 peut aussi être réalisé par tout autre procédé utilisant un moule 22 tel que par exemple l'estampage.

Ce moule 22, représenté à la figure 3, délimite un volume 24 qui est complémentaire de l'élément 10 à obtenir.

Le moule 22 comporte une paroi 26 destinée à la réalisation des riblets 16. Cette paroi 26 est ainsi située au niveau de la face 12 de l'élément 10 à obtenir, qui comporte les riblets 16 à obtenir.

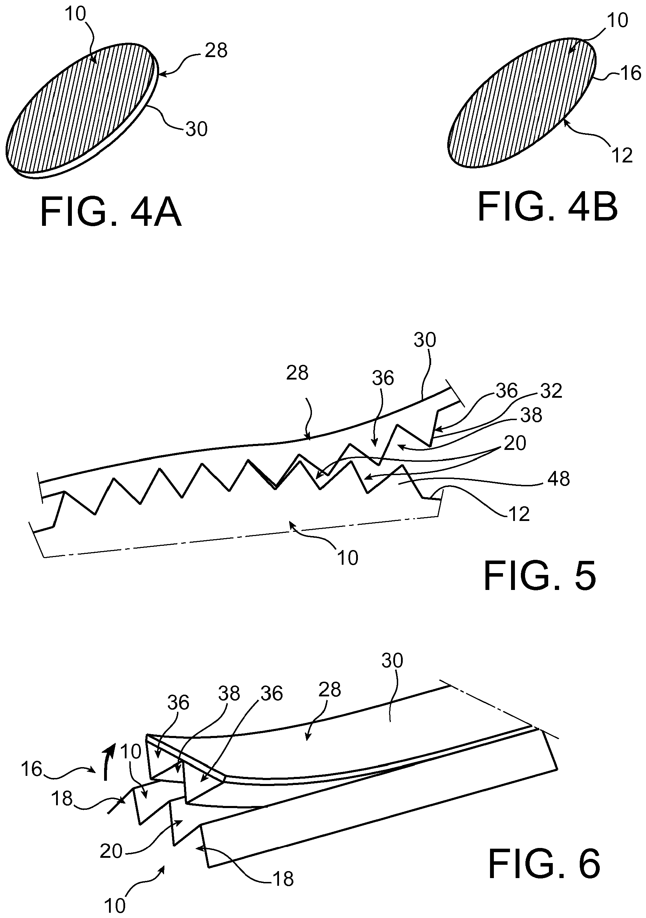

De préférence, cette paroi 26 du moule 22 est recouverte par un film souple 28 présentant une face lisse 30 qui est destinée à venir en contact avec la paroi 26 et une surface externe 32 comportant des nervures 36 et des rainures 38 (représentées aux figures 5 et 6), à partir desquelles les nervures 18 et les rainures 20 de l'élément 10 seront obtenues.

Ainsi, lorsque le moule 22 est muni du film souple 28, il présente une surface en relief correspondant à la face externe 32 du film 28, qui est destinée à produire les riblets 16. Les nervures 36 et les rainures 38 du film 28 sont ainsi complémentaires des nervures 18 et des rainures 20 de l'élément 10.

Selon le mode de réalisation représenté à la figure 3, les dimensions du film souple 28 sont identiques à celles de la paroi 26 du moule 22. Il sera compris que l'invention n'est pas limitée à ce mode de réalisation et que le film souple 28 peut s'étendre au-delà des bords de la paroi 26.

Le film 28 peut alors être maintenu en position dans le moule 22 lors de l'opération de réalisation de l'élément 10. Par exemple, le moule 22 comporte plusieurs composants 34 qui sont aptes à serrer entre elles des parties périphériques du film 28 qui dépassent de la paroi 26.

Le moule 22 est en outre conçu pour permettre au film 28 de se désolidariser facilement des composants 34 du moule 22 après l'opération d'injection.

En vue de préserver les riblets 16 de l'élément 10 lors du démoulage de l'élément 10, le film 28 reste solidaire de l'élément 10, c'est-à-dire que l'élément 10 et le film 28 sont simultanément démoulés hors du moule 22, comme représenté à la figure 4A.

La paroi 26 du moule 22 est lisse, comme la face 30 du film qui est destinée à venir en contact avec cette paroi 26. Ainsi, lors de la désolidarisation de l'élément 10 d'avec le moule 22, il n'y a aucun effort de frottement au niveau de la face externe 12 comportant les riblets 16, il y a donc peu de risques d'endommager les riblets 16 lors de cette opération.

Ensuite, le film 28 est désolidarisé de l'élément 10, comme représenté aux figures 4B, 5 et 6.

Pour permettre sa désolidarisation d'avec l'élément 10, le film 28 est réalisé en un matériau souple tel que par exemple à partir de polyuréthane, thermoplastique (PEEK, PEKK, PET ou polyamide), silicone ou d'époxy.

Selon une variante de réalisation, le film 28 est un film métallique de faible épaisseur. Par exemple, l'épaisseur du film 28 est de 50µm, il sera compris que cette valeur de l'épaisseur du film 28 ne prend pas en compte la hauteur des riblets 16.

Selon une autre variante, le film est un élément mixte composé de plusieurs matériaux comportant des pointes métalliques et un talon en polymère. Un exemple de réalisation d'un tel film 28 se déduit par exemple à partir du document US 8,678,316, qui décrit un film en matériau composite comportant des riblets.

Le matériau constitutif du film 28 est choisi pour pouvoir supporter les conditions de température et de pression produites lors du moulage, mais aussi pour qu'il soit facilement détachable de l'élément 10. De plus, pour que cette désolidarisation s'effectue sans endommager les riblets, notamment les pointes des nervures 18, la désolidarisation s'effectue par pelage du film 28, c'est-à-dire qu'il est décollé progressivement de la face externe 12.

Selon le mode de réalisation représenté à la figure 5, le pelage s'effectue selon une direction perpendiculaire à la direction principale des nervures 18 et rainures 20 formant les riblets 16, c'est-à-dire selon une direction globalement transversale.

Selon un autre mode de réalisation représenté à la figure 6, le pelage s'effectue selon la direction principale des nervures 18 et rainures 20 formant les riblets 16, c'est-à-dire selon une direction globalement longitudinale.

Grâce à un pelage du film 28 pour le désolidariser de l'élément 10, il n'y a pas de déplacement de l'ensemble du film 28 parallèlement à la face supérieure 12 de l'élément 10. Ainsi, aucune action transversale ou longitudinale n'est exercée sur les nervures 18 des riblets 16, le risque de casse de ceux-ci est donc réduit.

Le procédé pour réaliser l'élément 10, avec les riblets 16 directement intégrés à celui-ci, c'est-à-dire pour lequel les riblets 16 sont réalisés simultanément avec l'élément 10 comprend les étapes successives consistant à :
- fournir le moule 22 dont le volume intérieur 24 est destiné à former l'élément 10 ;
- fournir un film 28 dont une face 32 comporte des nervures 36 et/ou des rainures 38 complémentaires des nervures 18 et/ou des rainures 20 des riblets 16 à obtenir;
- disposer le film 28 sur une paroi du moule 22 délimitant en partie le volume intérieur 24 du moule. Le volume restant est alors complémentaire de l'élément 10 à obtenir, avec les riblets 16 ;
- réaliser l'opération de moulage de l'élément 10, par exemple par injection puis cuisson d'une résine ;
- démouler l'élément 10 et le film 28 simultanément, c'est-à-dire que l'élément 10 et le film 28 restent solidairement liés l'un à l'autre, comme représenté à la figure 4A ;
- désolidariser le film 28 d'avec l'élément 10 pour dévoiler les riblets 16.

Le film 28 est réalisé par tout procédé connu permettant de former les rainures 38 et nervures 36 complémentaires des riblets 16 à obtenir. Par exemple, par moulage à partir d'un modèle maitre ou par gravure du film.

## Revendications

1. Procédé pour la réalisation d'un élément (10) aérodynamique, notamment pour un aéronef, comportant une face externe (12) et une pluralité de nervures (18) et/ou de rainures (20) parallèles formées sur ladite face externe (12),
le procédé consistant à réaliser simultanément ledit élément (10) et ses nervures (18) et/ou ses rainures (20) par l'utilisation d'un moule (22),
**caractérisé en ce que** le procédé comporte
- une étape de fourniture d'un film (28) en un matériau déformable, qui comporte des nervures (36) et/ou des rainures (38) complémentaires aux nervures (18) et/ou aux rainures (20) dudit élément (10),
- une étape de positionnement du film (28) sur une paroi (26) du moule (22),
- une étape de moulage de l'élément (10),
- une étape de séparation de l'élément (10) du moule (22), simultanément avec ledit film (28), et
- une étape de séparation du film (28) d'avec l'élément (10).

2. Procédé selon la revendication précédente, **caractérisé en ce que** l'étape de séparation du film (28) d'avec l'élément (10) consiste à retirer le film (28) de l'élément (10) par pelage.

3. Procédé selon la revendication précédente, **caractérisé en ce que** le pelage est réalisé parallèlement à l'orientation principale des nervures (18)/rainures (20).

4. Procédé selon la revendication 2, **caractérisé en ce que** le pelage est réalisé perpendiculairement à l'orientation principale des nervures (18)/rainures (20).

5. Moule (22) et film (28) pour la mise en œuvre d'un procédé selon l'une quelconque des revendications précédentes, pour obtenir un élément (10) comportant une face externe (12) et une pluralité de nervures (18) et/ou de rainures (20) parallèles formées sur ladite face externe (12),
**caractérisé en ce que** l'une (26) des parois du moule (22) est recouverte par le film (28) présentant une série de rainures (38) et de nervures (36) complémentaires des nervures (18)/rainures (20) de l'élément (10).

6. Moule (22) et film (28) selon la revendication précédente, **caractérisé en ce que** le moule (22) comporte des moyens de liaison du film (28) avec ladite paroi (26) du moule (22) qui permettent le maintien en position du film (28) lors d'une l'étape de moulage de l'élément (10) et qui permettent la séparation du film (28) d'avec le moule (22) lors du retrait de l'élément (10) hors du moule (22).

7. Moule (22) et film (28) selon la revendication précédente, **caractérisé en ce que** le film (28) s'étend au-delà des bords de ladite paroi (26) du moule.

8. Moule (22) et film (28) selon la revendication précédente, **caractérisé en ce que** des parties périphériques du film (28) sont serrées entre au moins deux éléments (34) constituant le moule (22) pour le maintien en position du film (28) sur la paroi (26) du moule (22).

9. Moule (22) et film (28) selon l'une quelconque des revendications 5 à 8, **caractérisé en ce que** le film (28) est réalisé à partir de polyuréthane, thermoplastique (PEEK, PEKK, PET ou polyamide), de silicone, d'époxy, d'une feuille métallique ou d'une peinture.

10. Moule (22) et film (28) selon l'une quelconque des revendications 5 à 9, **caractérisé en ce que** le film (28) comporte une face (30) qui est en contact avec ladite paroi (26) du moule et dont ladite face (30) et ladite paroi (26) sont toutes les deux lisses.

## Patentansprüche

1. Verfahren zur Herstellung eines aerodynamischen Elements (10), insbesondere für ein Luftfahrzeug, mit einer Außenfläche (12) und einer Mehrzahl von parallelen Rippen (18) und/oder Nuten (20), die auf der Außenfläche (12) ausgebildet sind,
wobei das Verfahren darin besteht, das Element (10) und seine Rippen (18) und/oder seine Nuten (20) durch den Einsatz einer Form (22) gleichzeitig herzustellen,
**dadurch gekennzeichnet, dass** das Verfahren
- einen Schritt der Bereitstellung eines Films (28) aus einem verformbaren Material, welcher Rippen (36) und/oder Nuten (38) aufweist, die komplementär zu den Rippen (18) und/oder zu den Nuten (20) des Elements (10) sind,
- einen Schritt der Positionierung des Films (28) auf einer Wand (26) der Form (22),
- einen Schritt des Formens des Elements (10),
- einen Schritt der Trennung des Elements (10) von der Form (22) gleichzeitig mit dem Film (28), sowie
- einen Schritt der Trennung des Films (28) von dem Element (10) umfasst.

2. Verfahren nach dem vorhergehenden Anspruch, **dadurch gekennzeichnet, dass** der Schritt der Trennung des Films (28) von dem Element (10) darin besteht, den Film (28) durch Abziehen von dem Element (10) wegzuziehen.

3. Verfahren nach dem vorhergehenden Anspruch, **dadurch gekennzeichnet, dass** das Abziehen parallel zur Hauptausrichtung der Rippen (18)/Nuten (20) ausgeführt wird.

4. Verfahren nach Anspruch 2, **dadurch gekennzeichnet, dass** das Abziehen senkrecht zur Hauptausrichtung der Rippen (18)/Nuten (20) ausgeführt wird.

5. Form (22) und Film (28) zur Durchführung eines Verfahrens nach einem der vorhergehenden Ansprüche, um ein Element (10) zu erhalten, das eine Außenfläche (12) und eine Mehrzahl von parallelen Rippen (18) und/oder Nuten (20) aufweist, die auf der Außenfläche (12) ausgebildet sind,
**dadurch gekennzeichnet, dass** die eine (26) der Wände der Form (22) von dem Film (28) bedeckt ist, der eine Reihe von Nuten (38) und Rippen (36) aufweist, welche zu den Rippen (18)/Nuten (20) des Elements (10) komplementär sind.

6. Form (22) und Film (28) nach dem vorhergehenden Anspruch, **dadurch gekennzeichnet, dass** die Form (22) Mittel zur Verbindung des Films (28) mit der Wand (26) der Form (22) aufweist, welche ermöglichen, dass der Film (28) während des Schrittes des Formens des Elements (10) in seiner Position gehalten wird, und welche die Trennung des Films (28) von der Form (22) während der Entnahme des Elements (10) aus der Form (22) ermöglichen.

7. Form (22) und Film (28) nach dem vorhergehenden Anspruch, **dadurch gekennzeichnet, dass** sich der Film (28) über die Ränder der Wand (26) der Form hinaus erstreckt.

8. Form (22) und Film (28) nach dem vorhergehenden Anspruch, **dadurch gekennzeichnet, dass** die Umfangsteile des Films (28) zwischen mindestens zwei, die Form (22) bildenden Elementen (34) eingeklemmt sind, um den Film (28) auf der Wand (26) der Form (22) in seiner Position zu halten.

9. Form (22) und Film (28) nach einem der Ansprüche 5 bis 8, **dadurch gekennzeichnet, dass** der Film (28) aus Polyurethan, Thermoplast (PEEK, PEKK, PET oder Polyamid), Silikon, Epoxid, einer Metallfolie oder einem Anstrich hergestellt ist.

10. Form (22) und Film (28) nach einem der Ansprüche 5 bis 9, **dadurch gekennzeichnet, dass** der Film (28) eine Fläche (30) aufweist, welche mit der Wand (26) der Form in Kontakt steht, und wobei sowohl die Fläche (30) als auch die Wand (26) glatt sind.

## Claims

1. Method for making an aerodynamic element (10), particularly for an aircraft, comprising an external face (12) and a plurality of parallel ribs (18) and/or grooves (20) formed on said external face (12),
the method consisting of making said element (10) and its ribs (18) and/or its grooves (20) simultaneously by the use of a mould (22),
**characterised in that** the method comprises:
- a step to supply a film (28) made of a deformable material that comprises ribs (36) and/or grooves (38) complementary to the ribs (18) and/or grooves (20) of said element (10),
- a step to position the film (28) on a wall (26) of the mould (22),
- a step in which the element (10) is moulded,
- a step in which the element (10) is separated from the mould (22) simultaneously with said film (28), and
- a step in which the film (28) is separated from the element (10).

2. Method according to the previous claim, **characterised in that** the step in which the film (28) is separated from the element (10) consists of removing the film (28) from the element (10) by peeling.

3. Method according to the previous claim, **characterised in that** peeling is done parallel to the principal orientation of the ribs (18)/grooves (20).

4. Method according to claim 2, **characterised in that** peeling is done perpendicular to the principal orientation of the ribs (18)/grooves (20).

5. Mould (22) and film (28) for implementing a method according to any of the previous claims, to obtain an element (10) comprising an external face (12) and a plurality of parallel ribs (18) and/or grooves (20) formed on said external face (12),
**characterised in that** one (26) of the walls of the mould (22) is covered by the film (28) comprising a series of grooves (38) and ribs (36) complementary to the ribs (18)/grooves (20) of the element (10).

6. Mould and film (28) according to the previous claim, **characterised in that** the mould (22) comprises means of connecting the film (28) with said wall (26) of the mould (22) such that the film (28) can be held in position during a step in which the element (10) is moulded and that enables separation of the film (28) from the mould (22) when the element (10) is removed from the mould (22).

7. Mould (22) and film (28) according to the previous claim, **characterised in that** that the film (28) extends beyond the edges of said wall (26) of the mould.

8. Mould (22) and film (28) according to the previous claim, **characterised in that** the peripheral parts of the film (28) are squeezed between at least two elements (34) forming the mould (22) to hold the film (28) in position on the wall (26) of the mould (22).

9. Mould (22) and film (28) according to any one of claims 5 to 8, **characterised in that** the film (28) is made from polyurethane, thermoplastic (PEEK, PEKK, PET or polyamide), silicone, epoxy, a metal sheet or a paint.

10. Mould (22) and film (28) according to any one of claims 5 to 9, **characterised in that** the film (28) comprises a face (30) that is in contact with said wall (26) of the mould and in which said face (30) and said wall (26) are both smooth.
